# FASCICULE DE BREVET EUROPEEN

(11) **EP 0 748 739 B1**
(45) Date de publication et mention de la délivrance du brevet: **24.02.1999**
(21) Numéro de dépôt: 96460022.5
(22) Date de dépôt: 10.06.1996
(51) Int. Cl.: B65B 25/06, A22C 11/00

(54) **Machine de mise en boîte de viande ou de poisson, notamment de filets de thon**
Vorrichtung zum Eindosen von Fleisch oder Fisch, insbesondere von Thunfischfilets
Machine for canning meat or fish, particularly tuna-fish fillets

(30) Priorité: 13.06.1995 FR 9507257
(43) Date de publication de la demande: 18.12.1996
(73) Titulaire: COMPAGNIE BRETONNE DE LA COQUILLE SAINT-JACQUES (SA)- COBRECO, 29100 Douarnenez (FR)
(72) Inventeur: Gourlaouen, Frédéric, 29000 Quimper (FR); Moreau, Francis, 29100 Douarnenez (FR)
(74) Mandataire: Schmit, Christian Norbert Marie

(56) Documents cités:
- US-A- 2 542 673
- US-A- 2 669 378
- US-A- 2 840 121

## Description

La présente invention concerne une machine destinée à la mise en boîte du poisson ou de la viande en tranches. Plus particulièrement, elle concerne une machine pour traiter le thon.

Ce type de machine est connue par la demande de brevet français n° 2 623 775, permettant la mise en boîte du thon, débité en tranches bien nettes, sans avoir à le réduire en miettes, et compactées ensuite pour former un bloc portion.

La machine selon la demande précitée comporte:
- un convoyeur des morceaux de poisson ou de viande avançant pas à pas et constitué par deux boucles sans fin de section semi-circulaire dont deux brins adjacents forment une voie d'amenée de section évasée allant progressivement vers une section en couloir cylindrique constituant l'extrémité aval;
- un tunnel coopérant avec l'extrémité aval du convoyeur afin de conformer les morceaux en un rouleau continu;
- un barillet rotatif tournant pas à pas de façon décalée par rapport à l'avance du convoyeur et dont le pourtour comporte des alvéoles cylindriques ouvertes vers l'extérieur et présentées tour à tour pour être remplies, à la sortie du tunnel, dans son alignement, dans une position horizontale, ensuite amenée dans une position verticale et amenée face à une boîte vide dans laquelle le contenu de l'alvéole est poussée au moyen d'un piston;
- un organe de coupe rotatif animé d'un mouvement transversal à la sortie du tunnel pour trancher une portion de rouleau de viande ou de poisson ayant pénétré dans une des alvéoles.

Dans cette machine, le convoyeur comporte d'une part, un transporteur sans fin dont le brin supérieur forme une voie à profil semi-circulaire et, d'autre part, au-dessus de la partie aval de ladite voie, un élément dont le profil est identique à celui du transporteur et formant une boucle supérieure, le brin inférieur de ladite boucle étant une ligne brisée dont la partie amont descend vers la partie aval qui est adjacente au brin du transporteur formant ladite voie, de sorte que sont constituées une section en entonnoir, puis une section en couloir cylindrique enveloppant la partie amont du tunnel destiné à coopérer avec une alvéole.

En fait, le transporteur et l'élément complémentaire sont chacun formés de deux chaînes dont les maillons sont associés par paire pour porter par l'intermédiaire de bras transversaux les bases de demi-anneaux dont les extrémités sont de profil complémentaire.

L'inconvénient de cette machine est principalement de deux ordres. D'une part, les bandes transporteuses constituées d'une pluralité de demi-anneaux conduisent à des risques d'incrustation dans les interstices séparant les anneaux, de lambeaux de thon. Il en résulte assez vite des problèmes sanitaires ainsi que des risques de bourrage à la sortie du transporteur. D'autre part, le thon transite d'abord dans une alvéole avant d'être transféré par un piston dans sa boîte. Tout ceci intervient défavorablement sur les cadences.

La présente invention a pour but de pallier ces inconvénients et concerne une nouvelle machine capable d'emboîter des filets de thon à cadence élevée en éliminant au maximum, à la fois les risques de bourrage et en permettant un entretien plus facile et donc une garantie meilleure sur le plan sanitaire.

A cet effet, l'invention concerne une machine du type précité dans laquelle on dispose directement dans les alvéoles d'un barillet de conception originale, les boites permettant leur remplissage direct sans devoir faire appel à un piston.

L'invention concerne plus généralement une machine pour la mise en boîte de viande ou de poisson préalablement formé en un rouleau cylindrique du diamètre de la boîte du type comportant un convoyeur chargé à la fois du transport et du formage en rouleau du produit à mettre en boîte, ledit convoyeur coopérant avec un organe de coupe rotatif chargé de la découpe à longueur voulue d'un tronçon dudit rouleau, le convoyeur étant constitué par deux brins adjacents de deux boucles sans fin formées par deux bandes continues et lisses de section semi-circulaire, les deux brins adjacents formant par leurs faces concaves à profil semi-circulaire une voie d'amenée à l'entrée du convoyeur de section évasée évoluant progressivement en une section de couloir cylindrique, les arêtes inférieures desdits brins adjacents étant jointives sur toute leur longueur.

Selon une autre caractéristique de l'invention, les deux bandes formant ledit convoyeur sont chacune entraînée par deux poulies d'extrémité, et les deux poulies de chaque boucle distincte constituant l'extrémité aval du convoyeur sont situées côte à côte et tournent autour de deux axes, situés de part et d'autre de l'axe d'alignement longitudinal, s'étendant parallèlement dans un sens perpendiculaire à celui-ci pour créer une zone de formage, alors que les deux autres poulies de chaque boucle constituant l'extrémité amont dudit convoyeur sont disposées côte à côte et tournent autour de deux axes formant entre eux un angle ouvert vers le haut pour constituer une zone de chargement.

L'invention concerne également une telle machine caractérisée en ce qu'à travers un manchon de liaison, ce convoyeur coopère avec un barillet constitué par une couronne tronconique tournant autour d'un axe incliné à 45° dans le plan vertical de l'axe dudit manchon de liaison, des alvéoles étant réalisées périphériquement sur la surface latérale de la couronne tronconique formant elle-même un angle de 45° par rapport à sa base de manière que, lors de la rotation dudit barillet autour de son axe, une alvéole donnée contenant une boîte vide se positionne dans un premier temps, dit de chargement, face à la sortie du manchon de liaison, le fond de la boîte étant vertical et perpendiculaire à l'axe du manchon, dans un deuxième temps, dit d'évacuation, dans une position telle, que ledit fond se trouve dans un plan horizontal.

D'autres caractéristiques de l'invention ressortiront au cours de la description qui va suivre, qui devront être considérées isolément ou selon toutes leurs combinaisons techniques possibles.

Cette description donnée à titre d'exemple non limitatif fera mieux comprendre comment l'invention peut être réalisée, en référence aux dessins annexés, dans lesquels:
- la figure 1 représente schématiquement en perspective, l'architecture générale du système de convoyage et de mise en forme du thon, associé à un barillet de remplissage pour constituer la machine selon l'invention;
- la figure 2 représente une coupe transversale selon la ligne II-II de la figure 1;
- la figure 3 représente une coupe transversale selon la ligne III-III de la figure 1;
- la figure 4 représente en plan et à échelle agrandie l'extrémité aval du convoyeur, du barillet avec une boîte en position de remplissage, et du manchon de liaison (en coupe) prévu entre le convoyeur et le barillet;
- la figure 5 est une vue schématique illustrant l'architecture et la fonction du barillet;
- la figure 6 est une vue d'ensemble latérale de la machine selon l'invention.

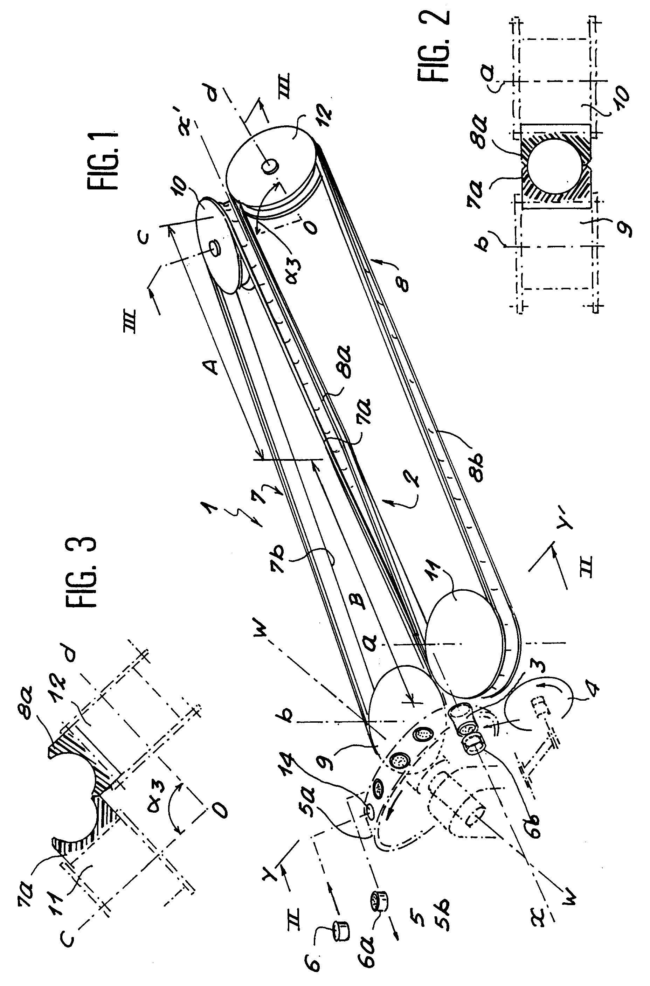

Comme le montre la figure 1, une machine 1 conforme à l'invention comprend :
- un convoyeur 2 chargé de l'acheminement et du formage du produit à mettre en boîte, notamment dans l'exemple décrit de filets de thon;
- un barillet 5 accomplissant une fonction de support de boîtes 6 récupérant directement à la sortie du convoyeur 2 un tronçon de rouleau de thon découpé au moyen d'un organe de coupe rotatif 4, lequel tronçon est poussé automatiquement dans la boîte vide 6b qui se présente face au convoyeur;
- un séquenceur (non visible) coordonnant les mouvements pas à pas du convoyeur 2, du barillet 5 et de l'organe de coupe rotatif 4.

Selon une caractéristique importante de l'invention, le convoyeur 2 avance pas à pas et est constitué par deux boucles sans fin 7 et 8 de section semi-circulaire, dont deux brins adjacents 7a et 8a, forment à l'entrée du convoyeur (en amont) une voie d'amenée de section évasée (figure 3) évoluant progressivement vers la sortie en une section en couloir cylindrique (figure 2) constituant la section aval dudit convoyeur 2. En fait, le chargement de la voie d'amenée constituée par les brins adjacents 7a et 8a est sensiblement effectué dans la zone A du convoyeur alors que la mise en forme de rouleau dudit chargement est effectuée dans la zone B.

Selon une autre caractéristique de l'invention, particulièrement bien illustrée par les figures 1, 2 et 3, les boucles sans fin 7 et 8 constituant le convoyeur 2 sont formées par deux bandes continues et lisses de section semi-circulaire, autrement dit qui présentent une face extérieure continue et lisse concave à profil semi-circulaire. Le long des brins adjacents 7a, 8a, lesdites faces concaves sont en regard l'une de l'autre et sont jointives par leur arête ou bord inférieur Lesdites bandes continues constituant les boucles sans fin 7 et 8, sont entraînées par deux poulies d'extrémité 9, 10 et 11, 12. Les deux poulies 9, 11 de chaque boucle distincte 7 et 8 constituent l'extrémité aval du convoyeur 1 et sont situées côte à côte et tournent autour de deux axes a et b verticaux, perpendiculaires à l'axe longitudinal xx' du convoyeur pour constituer une zone de formage B (figure 2). En revanche, les deux autres poulies 10 et 12 de chaque boucle 7 et 8 constituant l'extrémité amont dudit convoyeur 1 sont disposées côte à côte mais tournent autour de deux axes c et d formant entre eux un angle ₃ ouvert vers le haut pour constituer une zone de chargement A (figure 3).

De manière à assurer la retenue des morceaux de thon dans la zone de chargement A ou de formage B du convoyeur 1, les arêtes ou bords inférieurs desdites faces concaves le long des brins adjacents 7a, 8a des boucles 7, 8 sont réunies entre elles par l'intermédiaire d'une goulotte de liaison dans laquelle elles coulissent librement.

Les bandes sans fin continues et lisses des boucles 7 et 8 sont constituées, conformément à l'invention, par un ruban continu en une matière de qualité alimentaire telle que du caoutchouc naturel, lequel présente ladite face concave à profil semi-circulaire, et une face opposée jointe à une semelle en perbunan (caoutchouc noir synthétique), l'ensemble du ruban et de la semelle étant suffisamment rigide pour assurer le formage en rouleau des filets de thon et suffisamment souple néanmoins pour pouvoir précisément se vriller pour former une section ouverte (figure 3) en amont, évoluant vers une section circulaire en aval (figure 2). Eventuellement, des rives sont mises en place dans la zone B de formage pour contenir la pression résultant de la poussée du produit et assurer un bon formage du rouleau de thon dans cette partie du convoyeur avant qu'il ne soit pris en charge pour son évacuation.

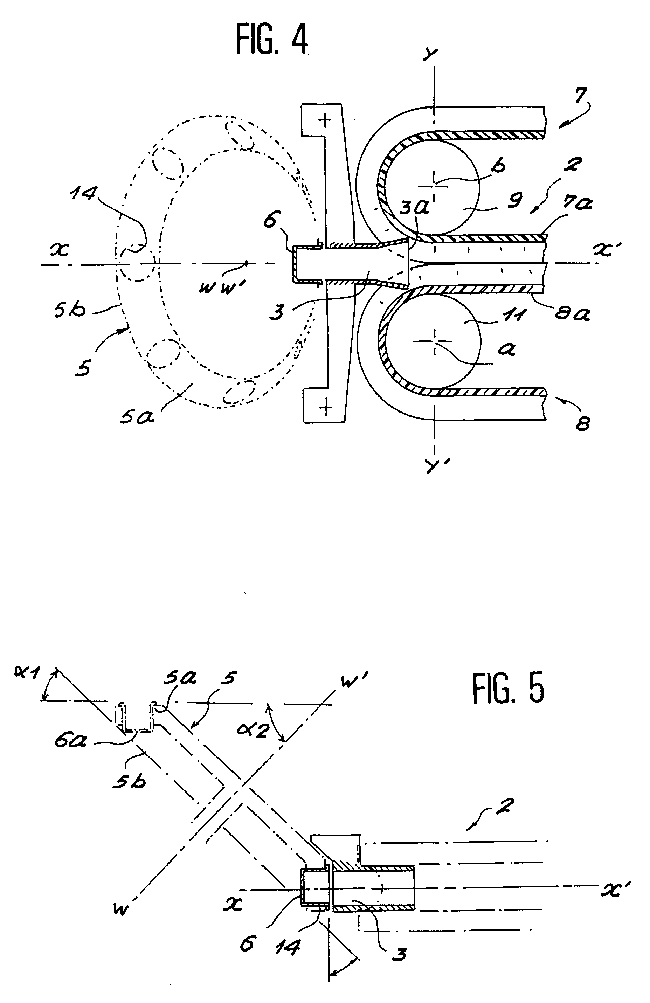

Selon une autre caractéristique de l'invention, et comme le montre plus précisément la figure 4, l'interface entre la sortie du convoyeur 2 et le barillet 5 est assurée au moyen d'un manchon 3 axé sur XX', dont le cône d'entrée 3a de diamètre légèrement supérieur à celui du rouleau facilite la réception de ce dernier en évitant au maximum le bourrage, ce cône 3a se prolongeant en une partie cylindrique dont le diamètre légèrement inférieur à celui du rouleau correspond aux dimensions de l'intérieur des boîtes 6 à remplir.

Le barillet rotatif 5, symbolisé dans les figures 1 et 4 en pointillés, est constitué par un élément tournant pas à pas de façon décalée par rapport à l'avance du convoyeur 2. Conformément à l'invention, le pourtour du barillet 5 comporte des alvéoles 14 destinées à recevoir des boîtes 6 ouvertes vers l'extérieur venant l'une après l'autre se positionner face à la sortie du manchon 3. L'architecture et la cinétique sont plus clairement illustrées dans la figure 5.

Cette couronne constituant le barillet 5 tourne autour d'un axe ww' incliné selon un angle α₂ de 45° par rapport à l'horizontale, dans le plan vertical de l'axe xx', tandis que l'ensemble des alvéoles 14 porteuses des boîtes 6 sont réalisées périphériquement sur la surface latérale 5a de la couronne tronconique formant elle-même un angle α₁ de 45° par rapport à sa base 5b. Le chargement des boîtes 6 a lieu dans la position horaire de six heures sur le barillet, et leur évacuation dans la position horaire de douze heures, environ. Il résulte de cette architecture qu'au cours de la rotation du barillet autour de l'axe ww', chacune des boîtes 6 se trouve tour à tour en position de chargement face à la sortie du manchon 3 (fond de la boîte vide 6 en position verticale, perpendiculaire à l'axe xx'), puis se redresse progressivement jusqu'à être debout en position d'évacuation (fond de la boîte pleine 6a en position horizontale).

L'organe de coupe rotatif 4, quant à lui, est animé d'un mouvement transversal à la sortie du manchon 3 pour trancher une portion du rouleau de thon ayant pénétré dans la boite vide sous la poussée du rouleau.

En fait, quand la machine est en service, le séquencement des mouvements des divers organes est le suivant:
- le convoyeur 2 avance pas à pas ;
- le barillet 5 tourne pas à pas en alternance avec le convoyeur.

Quand le barillet est à l'arrêt, une des boîtes 6 est en face de la sortie du manchon 3. Par l'avance d'un pas du convoyeur 2, une portion de thon est injectée dans la boîte 6, après quoi l'organe de coupe 4 passe devant celle-ci pour séparer la portion. Dans une deuxième phase, le barillet 5 tourne d'un pas. Simultanément, une boîte pleine 6a est évacuée et une boîte vide se met en position de remplissage.

De manière connue en soi, tous ces mouvements sont obtenus par des liaisons mécaniques bielle-manivelle à partir d'une motorisation unique, d'indexeur, le tout commandé par un séquenceur.

Une chaîne d'alimentation de boîte vide 6 ainsi qu'une chaîne d'évacuation des boîtes pleines 6a sont prévues au niveau du barillet 5 (figure 1).

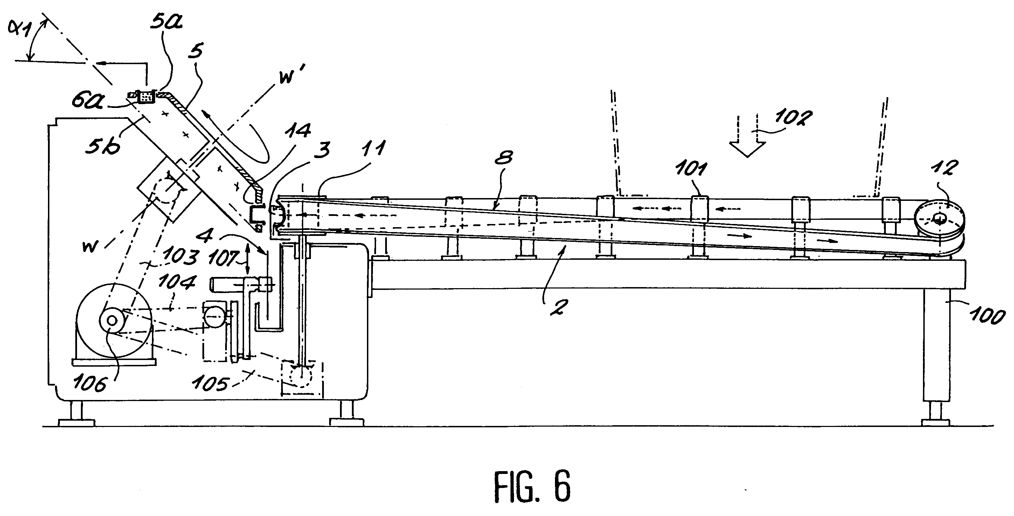

La figure 6 illustre l'ensemble de la machine 1 conforme à l'invention, vue latéralement, ainsi que schématiquement le système assurant la synchronisation des mouvements des éléments essentiels.

On y retrouve donc le convoyeur 2 monté sur un châssis 100 supportant les deux poulies 11 et 12 ainsi que le brin 8 (seul visible sur cette figure 6). Des guides 101 jalonnent le parcours des brins depuis la zone A jusqu'à la zone B, parcours suivi par les filets de thon et symbolisé par la flèche 102.

Sur cette figure 6 apparaissent également les organes de liaison avec leur indexeur 103, 104, 105 assurant à partir d'un organe central d'entraînement 106 les mouvements respectivement du barillet 5, de l'organe de coupe 4 doté d'un mouvement de va-et-vient symbolisé par la double flèche 107 et des poulies motrices telle que la poulie 11 visible sur la figure 6. Tous ces éléments sont reliés à un organe moteur central 106.

Une telle machine conforme à l'invention répond aux exigences de facilité de nettoyage, étant donné la continuité du couloir (sans aucun interstice) par où transite et est formé en rouleau le produit à mettre en boîte. Elle répond également aux exigences de cadence mettant en prise directe la boîte à remplir avec le produit de remplissage correctement formé grâce à un barillet dont l'architecture assure à la fois l'alimentation en boîte vide, leur chargement et leur évacuation lorsqu'elles sont pleines.

Une des applications préférées de l'invention se trouve dans la conserverie de thon en tranches obtenu à partir des filets de ce poisson.

## Revendications

1. Machine pour la mise en boîte de viande ou de poisson préalablement formé en un rouleau cylindrique du diamètre de la boîte du type comportant un convoyeur fonctionnant en continu chargé à la fois du transport et du formage en rouleau du produit à mettre en boîte, ledit convoyeur coopérant avec un organe de coupe rotatif (4) chargé de la découpe à longueur voulue d'un tronçon dudit rouleau, le convoyeur (2) étant constitué par deux brins adjacents (7a, 8a) de deux boucles sans fin (7, 8), les deux brins adjacents (7a, 8a) formant par leurs faces concaves à profil semi-circulaire une voie d'amenée à l'entrée du convoyeur de section évasée évoluant progressivement en une section de couloir cylindrique, caractérisée en ce que les deux boucles sans fin (7, 8) sont formées par deux bandes continues et lisses et en ce que les arêtes inférieures (7b, 8b) desdits brins adjacents (7a, 8a) sont jointives sur toute leur longueur.

2. Machine selon la revendication 1, caractérisée en ce que les deux bandes formant ledit convoyeur (2) sont chacune entraînée par deux poulies d'extrémité (9, 10 et 11, 12), et en ce que les deux poulies (9, 11) de chaque boucle distincte (7 et 8) constituant l'extrémité aval du convoyeur (2) sont situées côte à côte et tournent autour de deux axes (a et b), situés de part et d'autre de l'axe d'alignement longitudinal (xx'), s'étendant parallèlement dans un sens perpendiculaire à celui-ci pour créer une zone de formage (B), alors que les deux autres poulies (10, 12) de chaque boucle (7 et 8) constituant l'extrémité amont dudit convoyeur (2) sont disposées côte à côte et tournent autour de deux axes (c et d) formant entre eux un angle (α₃) ouvert vers le haut pour constituer une zone de chargement (A).

3. Machine selon l'une des revendications précédentes, caractérisée en ce que les bandes sans fin des boucles (7, 8) sont constituées d'une semelle en perbunan (caoutchouc noir synthétique) recouverte d'un matériau de qualité alimentaire en caoutchouc naturel.

4. Machine selon l'une des revendications précédentes, caractérisée en ce qu'à la sortie du convoyeur (2) le rouleau est pris en charge par un manchon de liaison (3) présentant une section d'entrée (3a) légèrement supérieure au diamètre du rouleau, cette section (3a) évoluant progressivement vers une section de sortie correspondant au diamètre intérieur des boites (6) à remplir.

5. Machine selon l'une des revendications 1 à 4, caractérisée en ce qu'elle comprend en outre un barillet (5) tronconique comportant à sa périphérie une pluralité d'alvéoles 14, adaptées pour recevoir les boîtes (6) à remplir.

6. Machine selon la revendication 5, caractérisée en ce que ledit barillet (5) est constitué par une couronne tronconique tournant autour d'un axe (ww') incliné selon un angle (α₂) de 45° par rapport à l'horizontale, dans le plan vertical de l'axe (xx') du manchon de sortie (3), les alvéoles (14) étant réalisées périphériquement sur la surface latérale (5a) de la couronne tronconique formant elle-même un angle (α₁) de 45° par rapport à sa base (5b) de manière que, lors de la rotation dudit barillet autour de l'axe (ww'), une alvéole donnée 14 contenant une boîte vide (6) se positionne dans un premier temps, dit de chargement, face à la sortie du manchon de liaison (3), le fond de la boîte étant vertical et perpendiculaire à l'axe (xx') et, dans un deuxième temps, dit d'évacuation, dans une position telle, que ledit fond se trouve dans un plan horizontal.

7. Machine selon l'une des revendications précédentes, caractérisée en ce que les arêtes inférieures (7b, 8b) des deux brins adjacents (7a, 8a) de boucles (7, 8), sont réunies entre elles par l'intermédiaire d'une goulotte de liaison dans laquelle elles coulissent librement.

8. Machine selon l'une des revendications précédentes, caractérisée en ce que tous les mouvements du convoyeur (2) de l'organe de coupe (3) et du barillet (5) sont commandés par un même organe moteur (106).

## Claims

1. A machine for canning meat or fish formed beforehand into a cylindrical roll of the diameter of the can, of the type having a continuously operated conveyor controlled so that it both conveys and forms into a roll the product to be placed in the can, said conveyor co-operating with a rotating cutting member (4) programmed to cut off to a desired length a section of said roll, the conveyor (2) consisting of two adjacent lengths (7a, 8a) of two endless loops (7, 8), the two adjacent lengths (7a, 8a) forming, at their concave faces of semi-circular profile, a delivery channel at the input of the conveyor having a flared section which gradually changes into a cylindrical chute section, characterised in that the two endless loops (7, 8) are formed by two smooth, continuous belts and in that the bottom edges (7b, 8b) of said adjacent lengths (7a, 8a) fit together across their entire length.

2. A machine as claimed in claim 1, characterised in that the two belts forming said conveyor (2) are each driven by two end pulleys (9, 10 and 11, 12) and in that the two pulleys (9, 11) of each separate loop (7 and 8) forming the downstream end of the conveyor (2) are located side by side and rotate about two axes (a and b) located on either side of the longitudinal axis of alignment (xx'), extending parallel in a direction perpendicular thereto, in order to create a forming zone (B) whilst the other two pulleys (10, 12) of each loop (7 and 8) forming the upstream end of said conveyor (2) are located side by side and rotate about two axes (c and d) subtending between them an angle (α₃) which is open at the top to form a charging zone (A).

3. A machine as claimed in one of the preceding claims, characterised in that the endless belts of the loops (7, 8) consist of a sole made from perbuna (synthetic black rubber) covered with a natural rubber material of the requisite quality for foodstuffs.

4. A machine as claimed in one of the preceding claims, characterised in that at the output of the conveyor (2), the roll is picked up by a connecting sleeve (3) having an inlet section (3a) slightly in excess of the diameter of the roll, this section (3a) changing progressively to an outlet section corresponding to the internal diameter of the cans (6) to be filled.

5. A machine as claimed in one of claims 1 to 4, characterised in that it also has a barrel (5) of a truncated-cone shape having at its periphery a plurality of compartments 14 designed to receive the cans (6) to be filled.

6. A machine as claimed in claim 5, characterised in that said barrel (5) consists of a truncated-conical crown rotating about an axis (ww') inclined at an angle (α₂) of 45° relative to the horizontal, in the vertical plane of the axis (xx') of the outlet sleeve (3), the compartments (14) being provided peripherally on the side face (5a) of the truncated-conical crown, which in turn subtends an angle (α₁) of 45° relative to its base (5b) so that when said barrel rotates about the axis (ww'), a given compartment 14 containing an empty can (6) is positioned during a first time, referred to as charging, facing the outlet of the connecting sleeve (3), the base of the can being vertical and perpendicular to the axis (xx') and, in a second time, referred to as discharging, in a position such that said base is in a horizontal plane.

7. A machine as claimed in one of the preceding claims, characterised in that the bottom edges (7b, 8b) of the two adjacent lengths (7a, 8a) of loops (7, 8) are joined to one another by means of a linking duct in which they slide freely.

8. A machine as claimed in one of the preceding claims, characterised in that all the movements of the conveyor (2), of the cutting member (3) and of the barrel (5) are controlled by a same motor member (106).

## Patentansprüche

1. Maschine zum Eindosen von Fleisch oder Fisch, das/der in eine zylindrische Rolle vorgeformt ist, deren Durchmesser demjenigen der Dose entspricht, wobei die Maschine vom Typ mit einer kontinuierlich arbeitenden Fördereinrichtung ist, die gleichzeitig für den Transport und die Rollenformung des einzudosenden Produkts zuständig ist, wobei die Fördereinrichtung mit einem drehenden Schneidorgan (4) zusammenwirkt, das für das Abschneiden von einem Teilstück der Rolle auf eine gewünschte Länge zuständig ist, wobei sich die Fördereinrichtung (2) aus zwei benachbarten Strängen (7a, 8a) zweier Endlosschleifen (7, 8) zusammensetzt, wobei die beiden benachbarten Stränge (7a, 8a) mit ihren konkaven Flächen halbkreisförmigen Profils einen Zuführungsweg zum Einlaß der Fördereinrichtung bilden, der einen erweiterten Querschnitt hat und nach und nach in einen Kanal zylindrischen Querschnitts übergeht, dadurch gekennzeichnet, daß die beiden Endlosschleifen (7, 8) aus zwei durchgehenden und glatten Bändern gebildet sind und daß die unteren Kanten (7b, 8b) der benachbarten Stränge (7a, 8a) auf ihrer ganzen Länge nebeneinanderliegend sind.

2. Maschine nach Anspruch 1, dadurch gekennzeichnet, daß die beiden Bänder, die die Fördereinrichtung (2) bilden, jeweils von zwei Endriemenscheiben (9, 10 und 11, 12) angetrieben sind, und daß die beiden Riemenscheiben (9, 11) jeder einzelnen Schleife (7 und 8), die das untere Ende der Fördereinrichtung (2) bilden, Seite an Seite angeordnet sind und sich um zwei Achsen (a und b) drehen, die sich auf der einen und der anderen Seite der Längsausrichtungsachse (xx') befinden und sich parallel in senkrechter Richtung dazu erstrecken, um einen Formungsbereich (B) zu schaffen, während die beiden anderen Riemenscheiben (10, 12) jeder Schleife (7 und 8), die das obere Ende der Fördereinrichtung (2) bilden, Seite an Seite angeordnet sind und sich um zwei Achsen (c und d) drehen, die zwischen sich einen Winkel (α₃) bilden, der nach oben geöffnet ist, um einen Beladebereich (A) zu bilden.

3. Maschine nach einem der vorhergehenden Ansprüche, dadurch gekennzeichnet, daß die Endlosbänder der Schleifen (7, 8) aus einer Sohle aus Perbunan (schwarzem synthetischem Gummi) bestehen, die mit einem lebensmitteltauglichen Material aus Naturgummi überzogen ist.

4. Maschine nach einem der vorhergehenden Ansprüche, dadurch gekennzeichnet, daß die Rolle am Auslaß der Fördereinrichtung (2) von einer Verbindungsmuffe (3) übernommen wird, die einen Einlaßquerschnitt (3a) hat, der etwas größer als der Rollendurchmesser ist, wobei dieser Querschnitt (3a) nach und nach in einen Auslaßquerschnitt übergeht, der dem Innendurchmesser der zu füllenden Dosen (6) entspricht.

5. Maschine nach einem der Ansprüche 1 bis 4, dadurch gekennzeichnet, daß sie ferner eine kegelstumpfförmige Trommel (5) enthält, die an ihrem Umfang eine Vielzahl von Zellen (14) umfaßt, die zur Aufnahme der zu füllenden Dosen (6) vorgesehen sind.

6. Maschine nach Anspruch 5, dadurch gekennzeichnet, daß die Trommel (5) aus einem kegelstumpfförmigen Kranz besteht, der sich um eine Achse (ww') dreht, die in Bezug auf die Horizontale entlang einem Winkel (α₂) von 45° in der vertikalen Ebene der Achse (xx') der Auslaßmuffe (3) geneigt ist, wobei die Zellen (14) am Umfang an der seitlichen Fläche (5a) des kegelstumpfförmigen Kranzes ausgebildet sind, der selbst in Bezug auf seine Basis (5b) einen Winkel (α₁) von 45° bildet, so daß bei der Drehung der Trommel um die Achse (ww') sich eine bestimmte Zelle (14), die eine leere Dose (6) enthält, in einer ersten Phase, der sogenannten Beladephase, gegenüber dem Auslaß der Verbindungsmuffe (3) positioniert, wobei der Dosenboden vertikal und senkrecht zur Achse (xx') ist, und in einer zweiten Phase, der sogenannten Abtransportphase, in einer Stellung, in der sich der Boden in einer horizontalen Ebene befindet.

7. Maschine nach einem der vorhergehenden Ansprüche, dadurch gekennzeichnet, daß die unteren Kanten (7b, 8b) der beiden benachbarten Stränge (7a, 7b) der Schleifen (7, 8) miteinander mittels einer Verbindungsrinne verbunden sind, in der sie frei gleiten.

8. Maschine nach einem der vorhergehenden Ansprüche, dadurch gekennzeichnet, daß alle Bewegungen der Fördereinrichtung (2), des Schneidorgans (4) und der Trommel (5) von ein und demselben Motor gesteuert sind.
